(19) Europäisches Patentamt
European Patent Office
Office européen des brevets

(11) Publication number: 0 000 578
B1

(12) **EUROPEAN PATENT SPECIFICATION**

(45) Date of publication of patent specification: 26.01.83

(51) Int. Cl.³: C 08 G 59/62

(21) Application number: 78100495.7

(22) Date of filing: 25.07.78

(54) **Process for preparing high molecular weight polyether resins from a diglycidyl ether of a bisphenol, a bisphenol and a halogenated bisphenol.**

(30) Priority: 27.07.77 US 819321

(43) Date of publication of application: 07.02.79 Bulletin 79/3

(45) Publication of the grant of the patent: 26.01.83 Bulletin 83/4

(84) Designated Contracting States: DE FR GB NL

(56) References cited: FR - A - 1 407 306

(73) Proprietor: THE DOW CHEMICAL COMPANY
Dow Center 2030 Abbott Road Post Office Box 1967
Midland Michigan 48640 (US)

(72) Inventor: Clarke, James Albert
120 Blossom
Lake Jackson Brazoria Texas (US)

(74) Representative: Weickmann, Heinrich, Dipl.-Ing. et al,
Postfach 860 820 Möhlstrasse 22
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 000 578 B1

Courier Press, Leamington Spa, England.

Process for preparing high molecular weight polyether resins from a diglycidyl ether of a bisphenol, a bisphenol and a halogenated bisphenol.

High molecular weight resins have been prepared from bisphenols and epoxy resins as disclosed in U.S. Patent Nos. 3,306,872, 3,379,684 and 3,637,590. Such high molecular weight resins are prepared from essentially pure bisphenols containing very small quantities of ortho-para and ortho-ortho′ isomers. Resins prepared from bisphenols containing significant quantities of these isomers have been found to have relatively lower molecular weights. The process of the present invention produces high molecular weight resins employing either type of bisphenols. French Patent specification No. 1,407,306 discloses the preparation of a high molecular weight polyhydroxyether resin from reactants comprising a glycidylether of a bisphenol, a bisphenol and a halogenated bisphenol, in the presence of a solvent and a catalyst.

The present invention is directed to a process for preparing polyhydroxyether resins by reacting an epoxy resin (A), which is a glycidyl ether of a bisphenol, with a bisphenol (B) and a halogenated bisphenol (D) in the presence of an organic liquid inert to the reactants and product, and a catalyst (C), the quantities of epoxy resin and bisphenol compounds employed provide an epoxide total phenolic hydroxyl ratio of from 1.15:1 to 0.97:1, characterized by adding, after the reaction between components (A) and (B) is at least 97 percent complete based upon the phenolic hydroxyl content, from 0.005 to 0.12 phenolic hydroxyl equivalents of the halogenated bisphenol (D) per equivalent of the total phenolic hydroxyl content contained in (B) and (D). Preferably, the percent completion is at least 98 percent.

Preferably the amount of phenolic equivalents of halogenated bisphenol added per total phenolic hydroxyl equivalents is from 0.01 to 0.05.

Suitable epoxy resins employed as Component (A) in the process of the present invention are the glycidyl ethers of bisphenols such as, for example, those represented by the formula

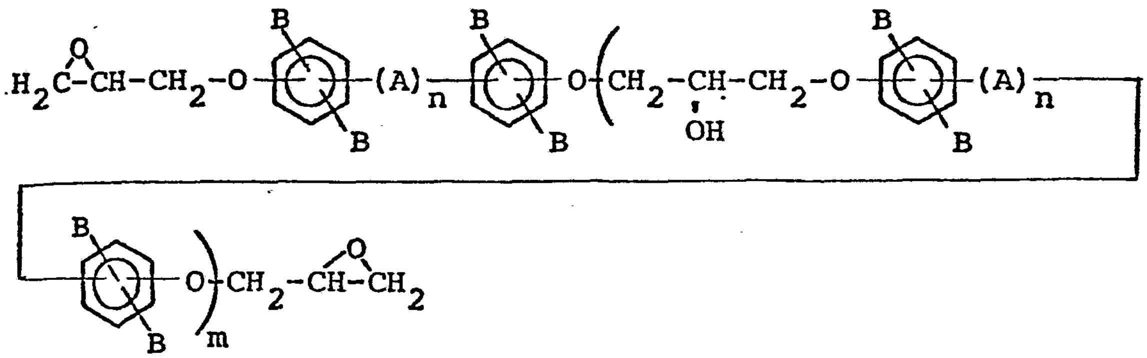

wherein each A is independently selected from a divalent hydrocarbon group containing from 1 to 8 carbon atoms, —O—, —S—, —S—S—,

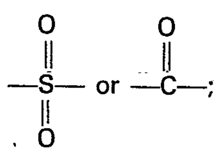

each B is independently selected from hydrogen, chlorine, bromine or an alkyl group containing from 1 to 4 carbon atoms, n has a value of 0 or 1 and m has an average value of from 0 to 2, preferably from 0 to 0.75.

Suitable bisphenols employed as Component (B) in the process of the present invention are, for example, those represented by the formula

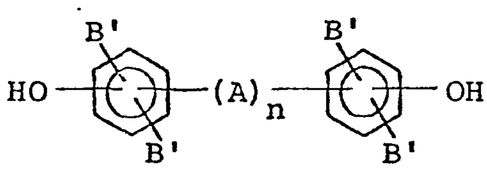

wherein A and n are as defined above and B′ is selected from hydrogen or an alkyl group having from 1 to 4 carbon atoms.

Suitable halogenated bisphenols employed as Component (D) in the process of the present invention are, for example, those represented by the formula

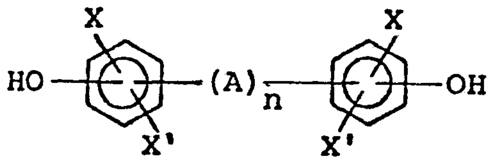

wherein A and n are as defined above, each X is independently chlorine or bromine and each X' is independently hydrogen, chlorine, bromine or an alkyl group having from 1 to 4 carbon atoms.

Suitable catalysts which can be employed as Component (C) in the process of the present invention include any catalyst which will catalyze the reaction between a vicinal epoxy group and a phenolic hydroxyl group. Such catalysts include, for example, those disclosed in U.S. Patent Nos. 3,306,872, 3,379,684, 3,477,990, 3,547,881, 3,637,590 and 3,948,855.

Particularly preferred catalysts are those quaternary phosphonium compounds having as the anion portion, a halide or a carboxyl group such as, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate acetic acid complex), tetrabutylphosphonium chloride, tetrabutylphosphonium bromide, tetrabutylphosphonium iodide, tetrabutylphosphonium acetate, and tetrabutylphosphonium diacetate (tetrabutylphosphonium acetate acetic acid complex). Those having a carboxyl group as the anion, such as, for example, ethyltriphenylphosphonium diacetate, are most preferred.

The quantities of epoxy resin and bisphenol compounds employed are those required to obtain the desired molecular weight and are preferably employed in such quantities as will provide an epoxide:total phenolic hydroxyl ratio of from 1.06:1 to .99:1.

The quantity of catalyst employed depends upon the particular reactants and catalyst being utilized and is usually in the range of from .1 to 10 millimoles, preferably from .2 to 6 millimoles per equivalent of the epoxide reactant. The higher quantities of catalyst are desired when higher molecular weight products are to be prepared.

Suitable organic liquids which are employed in the present invention include ketones and ethers such as, for example, acetone, methyl ethyl ketone, cyclohexanone, mesityloxide, dioxane, tetrahydrofuran, dimethoxyethane, lower alkyl ethers of ethylene and propylene glycol and mixtures thereof. Any organic liquid is suitable so long as it maintains the reactants and reaction products in solution or intimate suspension at the reaction temperature employed and which will not react significantly with the reactants or reaction products or the catalyst and which can be readily removed, if desired from the reaction product. The organic liquid is conveniently employed in quantities of from 20 to 100, preferably from 30 to 50 parts by weight per 100 parts of epoxy resin (Component A) employed.

The temperature at which the reaction can be conducted depends upon the particular reactants and catalysts employed but usually ranges from 120°C to 220°C, preferably from 130°C to 160°C.

The higher the temperature and the higher the concentration of catalyst, the less time that is required for the reaction to reach a specific degree of completion.

Examples 1, 2, 3 and 4 and Comparative Runs A, B and C

The following components were employed in the Examples and Comparative Runs.

The epoxy resin, Component (A), for all Examples and Comparative Runs was the glycidyl ether of bisphenol A having an epoxide equivalent weight of 182.5. In each Example and Comparative Run, 186.02 grams (1.02 equivalents) of the epoxide resin was employed.

In Examples 1, 2 and 3 and all Comparative Runs, the bisphenol, Component (B), employed was an impure bisphenol A (IPBPA) having an ortho-para isomer content of 2.2 percent and an ortho-ortho' isomer content of less than 0.02 percent. In Example 4, the bisphenol employed was a purified bisphenol A (PBPA) having an ortho-para isomer content of 0.2 percent and an ortho-ortho' isomer content of less than 0.01 percent.

The catalyst, Component (C), for all Examples and Comparative Runs was a 70 percent solution of ethyltriphenylphosphonium diacetate in methanol. It was employed at 3 millimoles per epoxy equivalent.

The organic liquid for all Examples and Comparative Runs was the ethyl ether of ethylene glycol. For all Examples and Comparative Runs B and C, 150 grams of the organic liquid was employed in each reaction mixture. In Comparative Run A, 30 grams of the organic liquid was employed.

The halogenated bisphenol, Component (D), for all Examples and for Comparative Run C was tetrabromo bisphenol A (TBBPA) having an hydroxyl equivalent weight of 272. No halogenated

bisphenol was added in Comparative Run A. In Comparative Run B, an additional amount of IPBPA was added instead of TBBPA.

In all Examples and Comparative Runs, the combined phenolic hydroxyl equivalents of Components (B) and (D) was 1.00. Thus, the equivalents of halogenated bisphenol employed per equivalent of the total phenolic hydroxyl content are easily calculated.

In all Examples and Comparative Run C, the reaction mixture was heated to 132°C for a period of time. Then the halogenated bisphenol, Component (D), was added and the reaction continued for a total reaction time of 7 hours. For Comparative Run A, the reaction mixture was heated to 135°C for a total of 7 hours without any halogenated bisphenol being added. For Comparative Run B, IPPBA was added instead of a halogenated bisphenol, and the reaction was run at 132°C for a total of 7 hours.

In all Examples and Comparative Runs, the equivalents of epoxide remaining in the reaction mixture was determined by titration employing the method described by R. R. Jay in *Analytical Chemistry,* volume 36, number 3, pages 667—8, March 1964.

In all Examples and Comparative Runs, the equivalents of phenolic hydroxyl remaining in the reaction mixture were determined by a potentiometric titration procedure. A sample containing about 0.1 milliequivalent of phenolic hydroxyl was weighed into a beaker and then dissolved in 20 grams of dimethylformamide. 75 ml of dimethylformamide is added to a second beaker and two drops of o-nitroaniline indicator is added. The solution is stirred and sparged with nitrogen gas to remove dissolved carbon dioxide. The dimethylformamide in the second beaker is then titrated potentiometrically with a 0.1 molar solution of tetrabutylammonium hydroxide in 90 weight percent toluene-10 weight percent methanol solvent. The endpoint is the center of the break in the titration curve corresponding to the color change of the indicator from yellow to orange. The sample dissolved in dimethylformamide is then added to the second beaker and titrated to the same endpoint as the solvent blank. The amount of carbon dioxide in the first 20 grams of dimethylformamide employed to dissolve the sample was assumed to be negligible.

The percent completion of the reaction between Components (A) and (B) after the first reaction period is calculated from the initial equivalents of phenolic hydroxyl and the equivalents of phenolic hydroxyl remaining after the first reaction period.

The weight average molecular weight, $\bar{M}w$, is determined by gel permeation chromatography.

The table contains a summary of Examples 1 to 4 and Comparative Runs A, B and C.

TABLE

| Reactants | Examples 1 | 2 | 3 | 4 | Comparative Runs A | B | C |
|---|---|---|---|---|---|---|---|
| Equivalent Epoxy Resin | 1.02 | 1.02 | 1.02 | 1.02 | 1.02 | 1.02 | 1.02 |
| Equivalent IPBPA | 0.98 | 0.95 | 0.92 | — | 1.0 | 0.98 | 0.98 |
| Equivalent PBPA | — | — | — | 0.98 | — | — | — |
| **At Time of Addition of Halogenated Bisphenol** | | | | | | | |
| Elapsed Reaction Time, Hours | 3 | 3 | 3 | 3 | 3 | 3 | 1—2/3 |
| Epoxy Equivalent | 0.037 | 0.058 | 0.085 | 0.031 | 0.033 | 0.0395 | 0.053 |
| Phenolic Equivalent | 0.019 | 0.0185 | 0.0125 | 0.022 | 0.027 | 0.026 | 0.033 |
| Percent Completion | 98.1 | 98.1 | 98.6 | 97.8 | 97.3 | 97.3 | 96.6 |
| Equivalent TBBPA Added | 0.02 | 0.05 | 0.08 | 0.02 | — | — | 0.02 |
| Equivalent IPBPA Added | — | — | — | — | — | 0.02 | — |
| **Analysis of Final Product** | | | | | | | |
| $\overline{M}w$ | 45500 | 38950 | 47750 | 38900 | 24100 | 26700 | 22450 |

**Claims**

1. A process for preparing polyhydroxyether resins by reacting an epoxy resin (A), which is a glycidyl ether of a bisphenol, with a bisphenol (B) and a halogenated bisphenol (D) in the presence of an organic liquid inert to the reactants and product, and a catalyst (C), the quantities of epoxy resin and bisphenol compounds employed provide an epoxide:total phenolic hydroxyl ratio of from 1.15:1 to 0.97:1, characterized by adding, after the reaction between components (A) and (B) is at least 97 percent complete based upon the phenolic hydroxyl content, from 0.005 to 0.12 phenolic hydroxyl equivalents of the halogenated bisphenol (D) per equivalent of the total phenolic hydroxyl content contained in (B) and (D).

2. The process as in Claim 1 characterized in that the halogenated bisphenol (D) is represented by the formula

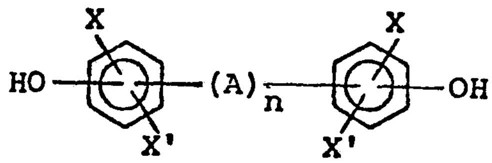

wherein A is a divalent hydrocarbon group containing from 1 to 8 carbon atoms, —O—, —S—, —S—S—,

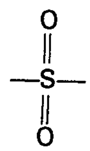
or
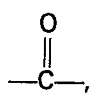
,

n has a value of 0 or 1, each X is independently chlorine or bromine, and each X′ is independently hydrogen, chlorine, bromine or an alkyl group having from 1 to 4 carbon atoms.

3. The process as in Claim 2 characterized in that A is

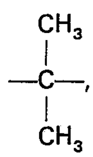
,

n is 1, X and X′ are both bromine.

4. The process as in Claim 1 characterized by adding from 0.01 to 0.05 phenolic hydroxyl equivalents of the halogenated bisphenol (D) per equivalent of the total phenolic hydroxyl content contained in (B) and (D).

5. The process as in Claim 1 characterized by adding the halogenated bisphenol (D) after the reaction between Components (A) and (B) is at least 98 percent complete.

**Revendications**

1. Procédé pour la préparation de résines polyhydroxyéther par réaction d'une résine époxy (A), qui est un glycidyléther d'un bisphénol, avec un bisphénol (B) et un bisphénol halogéné (D) en présence d'un liquide organique inerte vis-à-vis des réactifs et du produit obtenu, et d'un catalyseur (C), les quantités de résine époxy et des composés bisphénols utilisées donnent un rapport époxyde:hydroxyle phénolique total de 1,15:1 à 0,97:1, caractérisé par l'addition, une fois que la réaction entre les constituants (A) et (B) est terminée au moins à 97%, calculés sur la quantité d'hydroxyles phénoliques, de 0,005 à 0,12 équivalent d'hydroxyle phénolique du bisphénol halogéné (D) par équivalent de la quantité totale d'hydroxyles phénoliques contenus dans (B) et (D).

2. Procédé selon la revendication 1, caractérisé par le fait que le bisphénol halogéné (D) est représenté par la formule:

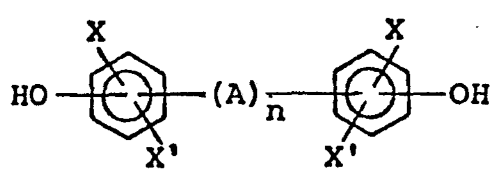

dans laquelle A est un groupe hydrocarboné divalent contenant de 1 à 8 atomes de carbone, —O—, —S—, —S—S—,

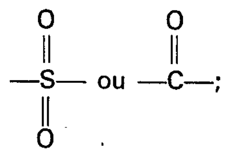

n a une valeur de 0 à 1; chaque X est indépendamment du chlore ou dù brome, et chaque X′ est indépendamment de l'hydrogène, du chlore, du brome ou un groupe alkyle ayant de 1 à 4 atomes de carbone.

3. Procédé selon la revendication 2, caractérisé par le fait que A est

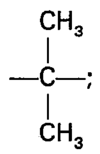

n est 1; X et X′ sont tous les deux du brome.

4. Procédé selon la revendication 1, caractérisé par l'addition de 0,01 à 0,05 équivalent d'hydroxyle phénolique du bisphénol halogéné (D) par équivalent de la quantité totale d'hydroxyles phénoliques contenus dans (B) et (D).

5. Procédé selon la revendication 1, caractérisé dans l'addition du bisphénol halogéné (D) une fois que la réaction entre les constituants (A) et (B) est terminée au moins à 98%.

**Patentansprüche**

1. Verfahren zur Herstellung von Polyhydroxyetherharzen durch Reaktion eines Epoxyharzes (A), das ein Glycidylether eines Bisphenols ist, mit einem Bisphenol (B) und einem halogenierten Bisphenol (D) in Anwesenheit einer organischen Flüssigkeit, die den Reaktanden und dem Produkt gegenüber inert ist, und einem Katalysator (C), wobei das Epoxyharz und die Bisphenolkomponenten in Mengen angewendet werden, die ein Verhältnis von Epoxid zu der gesamten Phenolhydroxylmenge von 1,15:1 bis 0,97:1 ergeben, dadurch gekennzeichnet, daß nachdem mindestens 97% der Reaktion zwischen den Komponenten (A) und (B) abgelaufen ist, bezogen auf den Gehalt an Phenolhydroxyl, 0,005 bis 0,12 Äquivalent Phenolhydroxyl an halogeniertem Bisphenol (D) pro Äquivalent des gesamten Gehaltes an Phenolhydroxyl, der in (B) und (D) enthalten ist, zugegeben werden.

2. Verfahren nach Anspruch 1 dadurch gekennzeichnet, daß das halogenierte Bisphenol (D) durch die allgemeine Formel

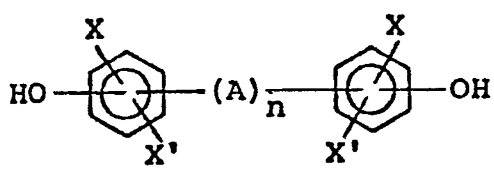

dargestellt wird, wobei A eine divalente Kohlenwasserstoffgruppe ist, die ein bis acht Kohlenstoffatome, —O—, —S—, —S—S—,

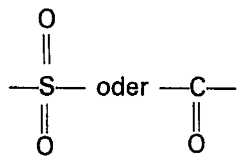

enthält, n den Wert 0 oder 1 hat, jedes X unabhängig Chlor oder Brom und X′ unabhängig Hydrogen, Chlor, Brom oder eine Alkylgruppe mit 1 bis 4 Kohlenstoffatomen darstellt.

3. Verfahren nach Anspruch 2, dadurch gekennzeichnet, daß A

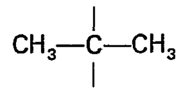

ist, n den Wert 1 hat, X und X' beide Brom darstellen.

4. Verfahren nach Anspruch 1, dadurch gekennzeichnet, daß 0,01 bis 0,05 Äquivalente Phenolhydroxyl des halogenierten Bisphenols (D) pro Äquivalent des gesamten Gehaltes an Phenolhydroxyl, der in (B) und (D) enthalten ist, zugefügt werden.

5. Verfahren nach Anspruch 1, dadurch gekennzeichnet, daß das halogenierte Bisphenol (D) zugegeben wird, nachdem die Reaktion zwischen den Komponenten (A) und (B) zu mindestens 98% abgelaufen ist.